# EUROPÄISCHE PATENTANMELDUNG

(11) **EP 2 273 096 A2**
(43) Veröffentlichungstag der Anmeldung: **12.01.2011**
(21) Anmeldenummer: 10165607.2
(22) Anmeldetag: 11.06.2010
(51) Int. Cl.: F02M 25/07

(54) **Brennkraftmaschine mit Ladeluftkühler**

(30) Priorität: 08.07.2009 DE 102009027539
(71) Anmelder: Ford Global Technologies, LLC, Dearborn, MI 48126 (US)
(72) Erfinder: Stoffels, Harald, 50733 Köln (DE); Quiring, Stefan, 51373, Leverkusen (DE); Kuepper, Klaus, 41539, Dormagen (DE); Beu, Michael, 50259, Pulheim-Dansweiler (DE)
(74) Vertreter: Drömer, Hans-Carsten

(57) **Zusammenfassung**

Die Erfindung betrifft eine Brennkraftmaschine (1) mit mindestens einem Zylinder (2), mindestens einer Abgasleitung (3) zum Abführen der Verbrennungsgase aus dem mindestens einen Zylinder (2) und mindestens einer Ansaugleitung (4) zum Zuführen von Frischluft bzw. Frischgemisch in diesen mindestens einen Zylinder (2), die mit mindestens einem Ladeluftkühler (5) ausgestattet ist, der in der mindestens einen Ansaugleitung (4) angeordnet ist, wobei stromabwärts des mindestens einen Zylinders (2) mindestens ein als Schalldämpfer dienender Resonator (6) vorgesehen ist.

Es soll eine Brennkraftmaschine (1) der genannten Art bereitgestellt werden, die hinsichtlich der Geräuschminderung im Ansaugsystem optimiert ist, d. h. bei der insbesondere eine umfängliche Schalldämpfung zu geringen Kosten realisiert ist.

Erreicht wird dies mit einer Brennkraftmaschine (1) der oben genannten Art, die dadurch gekennzeichnet ist, dass
- der mindestens eine Resonator (6) in den mindestens einen Ladeluftkühler (5) integriert ist.

## Beschreibung

Die Erfindung betrifft eine Brennkraftmaschine mit mindestens einem Zylinder, mindestens einer Abgasleitung zum Abführen der Verbrennungsgase aus dem mindestens einen Zylinder und mindestens einer Ansaugleitung zum Zuführen von Frischluft bzw. Frischgemisch in diesen mindestens einen Zylinder, die mit mindestens einem Ladeluftkühler ausgestattet ist, der in der mindestens einen Ansaugleitung angeordnet ist, wobei stromabwärts des mindestens einen Zylinders mindestens ein als Schalldämpfer dienender Resonator vorgesehen ist.

Im Rahmen der vorliegenden Erfindung umfaßt der Begriff Brennkraftmaschine Dieselmotoren, Ottomotoren, aber auch Hybrid-Brennkraftmaschinen.

Brennkraftmaschinen werden in der Regel mit einer Ladeluftkühlung ausgestattet. Der Ladeluftkühler, der in der Ansaugleitung angeordnet wird, senkt die Temperatur der Frischluft bzw. des Frischgemisches und steigert damit die Dichte der Zylinderfrischladung. Der Kühler trägt so zu einer besseren Füllung des Brennraums mit Luft, d. h. zu einer größeren Luftmasse bei. Dies bietet insbesondere Vorteile, wenn ein Kompressor bzw. Verdichter zur Aufladung der Brennkraftmaschine vorgesehen ist und die Ladeluft infolge Kompression erwärmt ist und/oder die Brennkraftmaschine über eine Abgasrückführung verfügt, bei der das heiße Abgas stromaufwärts des Ladeluftkühlers in die Ansaugleitung eingeleitet wird. In beiden Fällen erweist sich eine Kühlung vor Eintritt in die Zylinder als besonders sinnvoll.

Die konstruktive Auslegung der Antriebseinheit, insbesondere die Anordnung der Brennkraftmaschine und der dazugehörigen Aggregate zueinander, aber auch im Motorraum, ist einer Vielzahl von Anforderungen unterworfen, was einer bestmöglichen Lösung einzelner konkreter Aufgaben im Rahmen der Auslegung der Antriebseinheit häufig entgegensteht. Dies betrifft auch die Anordnung des Ladeluftkühlers relativ zur Brennkraftmaschine und im Motorraum. Auf diese Problematik wird im Folgenden kurz eingegangen.

Der Aufbau und die Anordnung der Antriebseinheit im Motorraum eines Kraftfahrzeuges erfolgen in der Regel im Hinblick auf ein möglichst günstiges Crashverhalten des Fahrzeuges. Die Absorption der Unfallenergie und die Deformation des Motorraums bzw. die Erhaltung der Fahrgastzelle als Überlebensraum haben dabei Priorität. Die Notwendigkeit, ausreichend große Deformationswege zur Verfügung zu stellen, führt zu einer entsprechenden Beabstandung der Antriebseinheit von den den Motorraum begrenzenden Wandungen, insbesondere der Motorhaube und den Abschlußblechen.

Der Aufbau der Antriebseinheit wird weiter dadurch bestimmt, dass zunehmend mehrere Funktionen in einem einzigen Bauteil zusammengeführt werden, d. h. verschiedene Bauteile zu einem multifunktionalen Bauteil zusammengefaßt, oder Bauteile in andere Bauteile integriert werden, insbesondere um ein möglichst dichtes Packaging der gesamten Antriebseinheit zu realisieren und das Gewicht zu reduzieren, was den Kraftstoffverbrauch mindert.

So werden zunehmend Bauteile in den Zylinderkopf implementiert, d. h. integriert, beispielsweise die Leitung zur Abgasrückführung (AGR), mit der heißes Abgas von der Abgasseite auf die Ansaugseite zurück geführt wird, gegebenenfalls zusammen mit dem dazugehörigen AGR-Ventil.

Häufig werden auch die Auslaßkanäle, d. h. die Abgasleitungen, die sich an die Auslaßöffnungen der Zylinder anschließen, in den Zylinderkopf integriert und innerhalb des Zylinderkopfes zu einer gemeinsamen Abgasleitung oder mehreren gemeinsamen Abgasleitungen zusammengeführt. Die Zusammenführung von Abgasleitungen bis hin zu einer gemeinsamen Abgasleitung wird als Abgaskrümmer bzw. Krümmer bezeichnet.

Die Auslegung des Abgasabführsystems und des Ansaugsystems ist in besonderer Weise eingeschränkt, wenn die Brennkraftmaschine mittels Abgasturboaufladung aufgeladen wird.

Bei einem Abgasturbolader sind ein Verdichter und eine Turbine auf derselben Welle angeordnet, wobei der heiße Abgasstrom der Turbine zugeführt wird, sich unter Energieabgabe in der Turbine entspannt und dabei die Welle in Drehung versetzt. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch die Aufladung der Zylinder erreicht wird.

Prinzipbedingt muß der Abgasturbolader in der Weise positioniert werden, dass eine Anordnung der Turbine in der Abgasleitung und gleichzeitig eine Anordnung des Verdichters in der Ansaugleitung ermöglicht wird. Die gasführenden Leitungen auf der Abgasseite bzw. Ansaugseite der Brennkraftmaschine sind entsprechend auszuführen.

Zudem wird angestrebt, die Turbine des Laders möglichst nahe am Auslaß der Brennkraftmaschine anzuordnen, um auf diese Weise die Abgasenthalpie der heißen Abgase, die maßgeblich vom Abgasdruck und der Abgastemperatur bestimmt wird, optimal nutzen zu können. Ein geringes Abgasvolumen in den Abgasleitungen stromaufwärts der Turbine gewährleistet zudem ein schnelles Ansprechverhalten des Turboladers. Der Weg der heißen Abgase zu den Abgasnachbehandlungssystemen wird dadurch ebenfalls verkürzt.

Aus den zuvor genannten Gründen wird ein Abgasturbolader vorzugsweise auf Höhe des Zylinderkopfes angeordnet, weshalb das Teilstück der mindestens einen Ansaugleitung, welches auf der Ansaugseite zwischen dem Verdichter und dem mindestens einen Zylinder verläuft, zwangsläufig sehr kurz ist, d. h. nur eine geringe Länge aufweist.

Das Vorsehen eines Ladeluftkühlers zwischen dem Verdichter und dem mindestens einen Zylinder beeinflußt bzw. erschwert die Ausführung des Ansaugsystems, insbesondere des zuvor erwähnten Teilstücks, zusätzlich.

Unabhängig davon, ob tatsächlich ein Verdichter zwecks Aufladung vorgesehen wird oder nicht, ist die Positionierung des Ladeluftkühlers aufgrund der sehr beengten Platzverhältnisse im Motorraum schwierig und insbesondere durch den Sicherheitsabstand, der zur Motorhaube einzuhalten ist, bestimmt.

Nach dem Stand der Technik werden der Zylinderkopf bzw. der Verdichter und der Ladeluftkühler häufig mittels eines sogenannten Ladeluftschlauchs miteinander verbunden. Die Ausbildung des in Rede stehenden Teilstücks der mindestens einen Ansaugleitung als flexibler Ladeluftschlauch hat mehrere Vorteile bzw. Gründe.

Zum einen läßt sich der verformbare Ladeluftschlauch im Gegensatz zu einem starren Rohrleitungsstück auch bei sehr beengten Platzverhältnissen und komplexen Leitungsführungen bei der Montage ohne weiteres, d.h. in einfacherer Weise verlegen und befestigen.

Zum anderen gewährleistet der Ladeluftschlauch, dass die stromabwärts des Schlauchs befindlichen Komponenten von der Rollbewegung der Brennkraftmaschine entkoppelt werden, was auch Vorteile hinsichtlich der Geräuschentwicklung der Brennkraftmaschine hat.

Nichtsdestotrotz werden die Ansaugleitung bzw. der Ladeluftschlauch und damit auch die stromabwärts befindlichen Komponenten aufgrund der pulsierenden Arbeitsweise der Brennkraftmaschine zu Schwingungen angeregt. Ein Abgasturbolader verstärkt diesen Effekt.

Die zunehmende Geräuschemission wird als ein immer ernster zu nehmendes Umweltproblem angesehen, da sie sich nicht nur grundsätzlich auf die Lebensqualität, sondern insbesondere auch auf die Gesundheit der dem zunehmenden Lärm ausgesetzten Menschen nachteilig auswirkt, weshalb eine Vielzahl von Vorschriften erlassen worden ist, in denen die einzuhaltenden Geräuschgrenzwerte festgelegt wurden. Die wichtigsten Vorschriften sind dabei das Bundesimmissionsschutzgesetz (BImSchG) und die Richtlinien der Europäischen Kommission.

Konzentrierte sich anfangs die Entwicklung bei der Geräuschminderung auf den Motor, d. h. die Brennkraftmaschine, als der dominierenden Geräuschquelle des Kraftfahrzeuges, werden mittlerweile sämtliche Geräuschquellen, welche zur Gesamtgeräuschemission beitragen, mit in Betracht gezogen, um den immer schärferen gesetzlichen Vorschriften hinsichtlich der zulässigen Geräuschemission eines Kraftfahrzeuges weiterhin gerecht zu werden.

Aufgrund der oben erwähnten Schwingungsanregung des Ansaugsystems kann es zu einer starken Geräuschentwicklung kommen, insbesondere im hochfrequenten Bereich. Daher werden nach dem Stand der Technik zwischen dem mindestens einen Zylinder und dem mindestens einen Ladeluftkühler Mittel zur Reduktion von Schallemissionen, insbesondere als Schalldämpfer dienende Resonatoren, vorgesehen.

Die deutsche Patentschrift DE 10 2004 037 088 B3 beschreibt einen flexiblen Ladeluftschlauch, der einen gewellten Abschnitt und einen durch Umstülpen innerhalb des gewellten Abschnitts angeordneten rohrförmigen Abschnitt aufweist. Dadurch können Resonanzräume zwischen dem rohrförmigen Abschnitt und dem Wellenabschnitt erzeugt werden, die zu einer Herabsetzung des Geräuschpegels führen. Dieser Vorgehensweise zur Geräuschminderung sind aber enge Grenzen gesetzt, da die Art der Ausbildung der Resonanzräume nur wenige Freiheiten hinsichtlich der Geometrie der Resonanzräume läßt.

Die deutsche Patentschrift DE 198 18 873 C2 beschreibt eine aufgeladene Brennkraftmaschine, bei der in der Verbindungsleitung zwischen dem Verdichter eines Abgasturboladers und dem Ladeluftkühler wenigstens ein auf dem Prinzip eines Helmholtz-Resonators beruhender Schalldämpfer vorgesehen ist.

Das Prinzip des Helmholtz-Resonators beruht darauf, dass eine Schallwelle auf eine Wandöffnung trifft und dabei das in der Öffnung befindliche und benachbarte Volumen zu Schwingungen anregt, die durch die im Bereich der Öffnung auftretende Reibung gedämpft werden. Eine hinter der Öffnung befindliche Kammer bzw. das sich in der Kammer befindliche Fluidvolumen wirkt als Feder, weshalb das System in der Gesamtheit als reibungsdämpfender Feder-Masse-Schwinger angesehen werden kann.

Aufgrund des Aufbaus eignet sich ein Helmholtz-Resonator für den Einbau in rotationssymmetrische, insbesondere rohrförmige, Leitungen und Komponenten, weshalb die DE 198 18 873 C2 eine Integration des Resonators in die vom Verdichter wegführende Ansaugleitung bzw. in den Verdichter selbst vorsieht.

Eine Implementierung des Resonators in die Ansaugleitung führt zu einem größeren Leitungsquerschnitt und einer höheren Steifheit der Ansaugleitung, was die Verlegbarkeit nachteilig beeinflußt, d. h. herabsetzt bzw. die Montage erschwert. Eine Integration des Resonators in den Verdichter ist vergleichsweise kostenintensiv, da das Verdichtergehäuse in der Regel ein Gussteil ist und damit die Herstellung, d. h. die Integration des Resonators in den Verdichter aufwendig ist.

Vor dem Hintergrund des oben Gesagten ist es die Aufgabe der vorliegenden Erfindung, eine Brennkraftmaschine gemäß dem Oberbegriff des Anspruchs 1 bereitzustellen, die hinsichtlich der Geräuschminderung im Ansaugsystem optimiert ist, d. h. bei der insbesondere eine umfängliche Schalldämpfung zu geringen Kosten realisiert ist.

Gelöst wird diese Aufgabe durch eine Brennkraftmaschine mit mindestens einem Zylinder, mindestens einer Abgasleitung zum Abführen der Verbrennungsgase aus dem mindestens einen Zylinder und mindestens einer Ansaugleitung zum Zuführen von Frischluft bzw. Frischgemisch in diesen mindestens einen Zylinder, die mit mindestens einem Ladeluftkühler ausgestattet ist, der in der mindestens einen Ansaugleitung angeordnet ist, wobei stromabwärts des mindestens einen Zylinders mindestens ein als Schalldämpfer dienender Resonator vorgesehen ist, und die **dadurch gekennzeichnet** ist, dass
- der mindestens eine Resonator in den mindestens einen Ladeluftkühler integriert ist.

Erfindungsgemäß wird der mindestens eine Resonator in den mindestens einen Ladeluftkühler integriert, so dass der mindestens eine Resonator und der mindestens eine Ladeluftkühler ein einteilig ausgebildetes oder modular aufgebautes Bauteil bilden.

Die Anordnung des Resonators im Ladeluftkühler hat eine Vielzahl von Vorteilen. Ein Ladeluftkühler weist von Hause aus ein großes Bauteilvolumen auf, so dass vergleichsweise großvolumige Resonatoren ausgebildet werden können. Es wird - im Vergleich zu einer Brennkraftmaschine ohne Resonator - kein zusätzlicher Bauraum beansprucht, wodurch ein dichtes Packaging der gesamten Antriebseinheit ermöglicht wird bzw. gewährleistet bleibt.

Aufgrund der Bauform eines Ladeluftkühlers ist man erfindungsgemäß nicht auf Resonatoren beschränkt, die auf dem Helmholtz-Prinzip beruhen und sich für die Integration in rohrförmige Elemente eignen. Vielmehr können bei der erfindungsgemäßen Brennkraftmaschine auch Resonatoren eingesetzt werden, die auf dem Herschel-Quincke-Prinzip beruhen. Insofern ergeben sich bei der Auswahl und dem Aufbau des mindestens einen eingesetzten Resonators gegenüber dem Stand der Technik wesentlich mehr Freiheiten, was eine umfängliche Schalldämpfung gestattet bzw. erst ermöglicht. Insofern hebt die erfindungsgemäße Verwendung des Ladeluftkühlers zur Ausbildung des Resonators die herkömmlichen Beschränkungen hinsichtlich der Größe und der Formgebung des Resonators auf.

Eine Integration des Resonators in den Ladeluftkühler hat auch Kostenvorteile. Da der Ladeluftkühler nicht so hohen mechanischen Belastungen ausgesetzt ist wie beispielsweise der Verdichter, können zur Herstellung des Ladeluftkühlers weniger feste Werkstoffe verwendet werden, beispielsweise Kunststoffe, die nicht nur kostengünstiger sind, sondern sich auch dadurch auszeichnen, dass sie sich leichter verarbeiten und bearbeiten lassen als beispielsweise Metall.

Durch die erfindungsgemäße Brennkraftmaschine wird die der Erfindung zugrunde liegende Aufgabe gelöst, nämlich eine Brennkraftmaschine gemäß dem Oberbegriff des Anspruchs 1 bereitzustellen, bei der insbesondere eine umfängliche Schalldämpfung zu geringen Kosten realisiert ist.

Die Integration des Resonators in den Ladeluftkühler verringert auch die Anzahl an Bauteilen im Vergleich zu Ausführungsformen, bei denen ein separater Resonator in der Ansaugleitung plaziert wird, was die Montage vereinfacht, insbesondere die Montagezeit verkürzt.

Vorteilhaft sind Ausführungsformen der Brennkraftmaschine, bei denen die Brennkraftmaschine aufgeladen ist.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck pₘₑ gesteigert werden.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, den Kraftstoffverbrauch zu minimieren, d. h. den Wirkungsgrad der Brennkraftmaschine zu verbessern.

Der zur Aufladung eingesetzte Verdichter, der ein Kompressor, d. h. ein mechanischer Lader, aber auch Bestandteil eines Abgasturboladers sein kann, kann dabei grundsätzlich stromaufwärts oder aber stromabwärts des Ladeluftkühlers in der Ansaugleitung angeordnet sein.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen mindestens ein Abgasturbolader vorgesehen ist, wobei die Turbine des Abgasturboladers in der mindestens einen Abgasleitung und der Verdichter in der mindestens einen Ansaugleitung stromaufwärts des mindestens einen Ladeluftkühlers angeordnet ist.

Die Vorteile eines Abgasturboladers beispielsweise im Vergleich zu einem mechanischen Lader bestehen darin, dass keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Nichtsdestotrotz sind auch Ausführungsformen vorteilhaft, bei denen ein als mechanischer Lader dienender Verdichter in der mindestens einen Ansaugleitung stromaufwärts des mindestens einen Ladeluftkühlers angeordnet ist.

Während bei Verwendung eines Abgasturboladers nämlich ein starker Drehmomentabfall bei Unterschreiten einer bestimmten Drehzahl zu beobachten ist, welcher durch den abnehmenden Abgasmassenstrom verursacht wird, kann bei einer Aufladung der Brennkraftmaschine mittels mechanischem Lader ein ausreichend hohes Leistungsangebot in allen Drehzahlbereichen gewährleistet werden.

Vorteilhaft sind Ausführungsformen der Brennkraftmaschine, bei denen die mindestens eine Ansaugleitung zwischen dem mindestens einen Zylinder und dem Ladeluftkühler mindestens einen Ladeluftschlauch umfaßt.

Wie bereits ausgeführt wurde, gewährleistet ein flexibler Ladeluftschlauch die Entkopplung der stromabwärts des Schlauchs befindlichen Komponenten von der Rollbewegung der Brennkraftmaschine. Der Einsatz eines Ladeluftschlauchs ist eine effektive Maßnahme zur Geräuschminderung und trägt insofern zur Lösung der der Erfindung zugrunde liegenden Aufgabe bei.

Der Ladeluftschlauch kann einen weiteren Resonator umfassen, beispielsweise einen Resonator wie in der DE 10 2004 037 088 B3 beschrieben ist.

Vorteilhaft sind Ausführungsformen, bei denen der mindestens eine Ladeluftschlauch zumindest streckenweise faltenbalgähnlich ausgebildet ist. Der Ladeluftschlauch ist vorzugsweise aus Kunststoff, d. h. aus einem elastomeren Material gefertigt.

Ist zur Aufladung der Brennkraftmaschine ein Verdichter in der mindestens einen Ansaugleitung stromaufwärts des mindestens einen Ladeluftkühlers angeordnet, sind Ausführungsformen vorteilhaft, bei denen der mindestens eine Ladeluftschlauch zwischen dem Verdichter und dem Ladeluftkühler angeordnet ist. Der Verdichter kann dabei ein mechanischer Lader oder Teil eines Abgasturboladers sein.

Vorteilhaft sind sowohl Ausführungsformen, bei denen der mindestens eine Resonator ein auf dem Helmholtz-Prinzip beruhender Resonator ist, als auch Ausführungsformen, bei denen der mindestens eine Resonator ein auf dem Herschel-Quincke-Prinzip beruhender Resonator ist.

Ist zur Aufladung der Brennkraftmaschine ein Verdichter in der mindestens einen Ansaugleitung angeordnet, können Ausführungsformen vorteilhaft sein, bei denen mindestens ein zusätzlicher Resonator vorgesehen ist, der in den Verdichter integriert ist.

Obwohl es grundsätzlich aufwendig, insbesondere kostenintensiv, ist, einen Resonator in den Verdichter zu integrieren und der Ausbildung der Resonanzräume durch den Aufbau des Verdichters engen Grenzen gesetzt sind, kann es vorteilhaft sein, einen derartigen Resonator zusätzlich, d. h. ergänzend vorzusehen.

Die dann mindestens zwei Resonatoren können nämlich auf unterschiedliche Frequenzen ausgelegt werden. Auf diese Weise kann der zusätzliche Resonator insbesondere auf Schwingungsfrequenzen abgestimmt werden, die hinsichtlich der zwischen dem Verdichter und dem Ladeluftkühler vorgesehenen Komponenten, d. h. Bauteile als kritisch anzusehen sind.

Grundsätzlich eröffnet ein zweiter zusätzlicher Resonator die Möglichkeit, die Frequenzen, die im Hinblick auf eine verminderte Geräuschemission gedämpft werden sollen, auf die mindestens zwei als Schalldämpfer dienenden Resonatoren zu verteilen, d. h. beide Resonatoren auf unterschiedliche Frequenzen bzw. Frequenzbänder auszulegen.

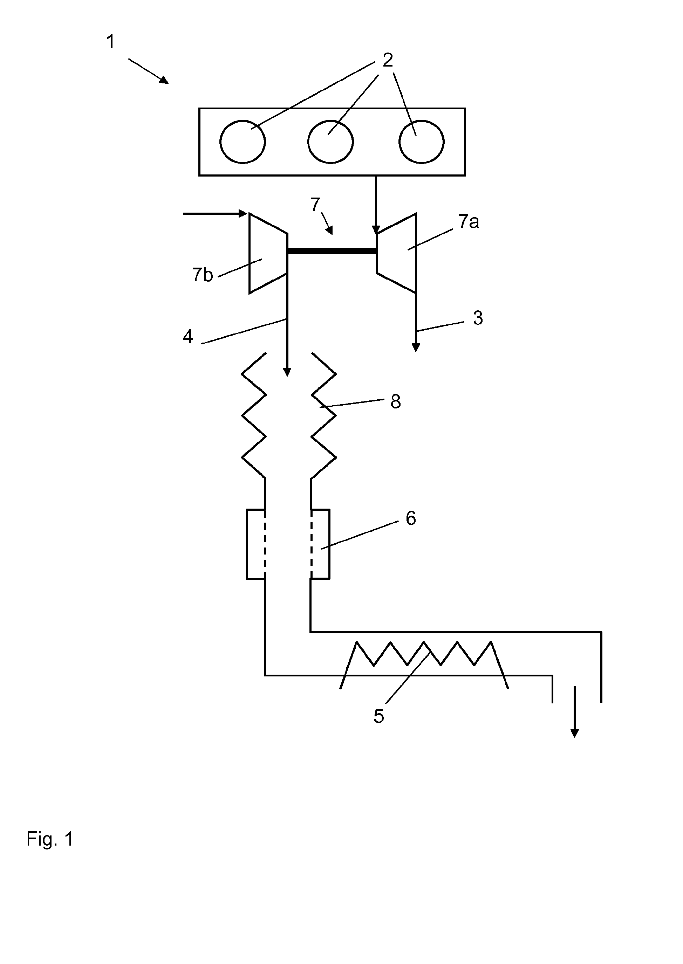

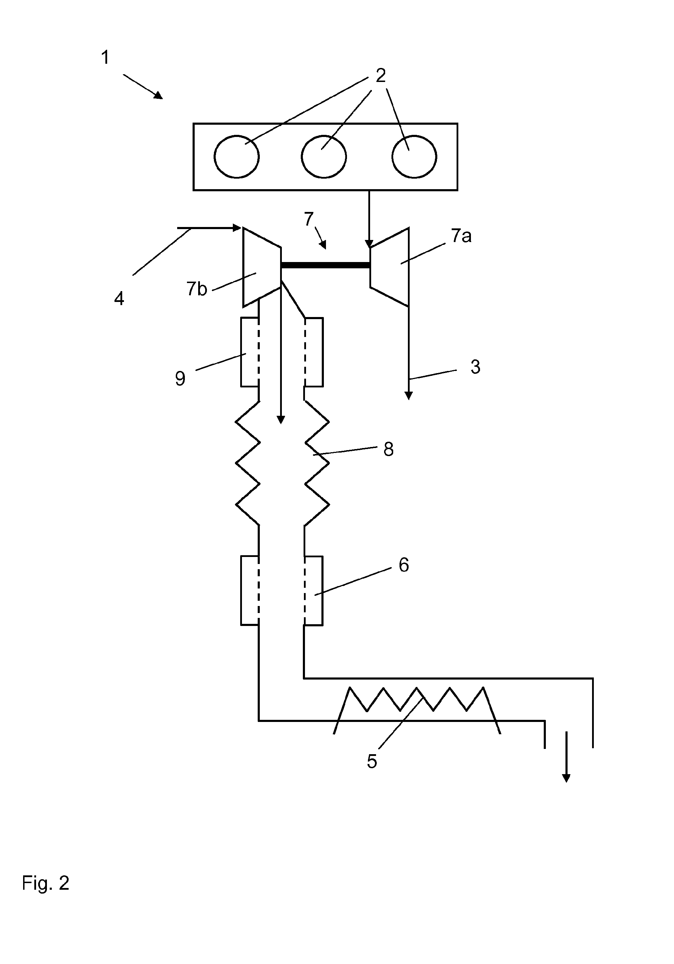

Im Folgenden wird die Erfindung anhand von zwei Ausführungsbeispielen gemäß den Figuren 1 und 2 näher beschrieben. Hierbei zeigt:
Fig. 1 schematisch eine erste Ausführungsform der Brennkraftmaschine, und
Fig. 2 schematisch eine zweite Ausführungsform der Brennkraftmaschine.

Figur 1 zeigt eine erste Ausführungsform der Brennkraftmaschine 1. Die dargestellte Brennkraftmaschine 1 verfügt über drei Zylinder 2, die in Reihe angeordnet sind. Es handelt sich folglich um einen Drei-Zylinder-Reihenmotor 1.

Die Brennkraftmaschine 1 ist zum Abführen der Verbrennungsgase aus den Zylindern 2 mit einer Abgasleitung 3 und zum Zuführen von Frischluft bzw. Frischgemisch in die Zylinder 2 mit einer Ansaugleitung 4 ausgestattet.

Bei der in Figur 1 dargestellten Brennkraftmaschine 1 handelt es sich um eine aufgeladene Brennkraftmaschine 1. Zur Aufladung der Brennkraftmaschine 1 ist ein Abgasturbolader 7 vorgesehen. Die Turbine 7a des Abgasturboladers 7 ist in der Abgasleitung 3 und der Verdichter 7b ist in der Ansaugleitung 4 stromaufwärts des Ladeluftkühlers 5 angeordnet.

Zur Kühlung der komprimierten Ladeluft ist in der Ansaugleitung 4 ein Ladeluftkühler 5 stromabwärts der Zylinder 2 und stromabwärts des Verdichters 7b angeordnet. Der Verdichter 7b ist mit dem Ladeluftkühler 5 mittels Ladeluftschlauch 8 verbunden. Der flexible Ladeluftschlauch 8 entkoppelt die stromabwärts des Schlauchs 8 befindlichen Komponenten von der Rollbewegung der Brennkraftmaschine 1. Der Ladeluftschlauch 8 ist faltenbalgähnlich ausgebildet und aus einem elastomeren Material gefertigt.

Zur Geräuschminderung im Ansaugsystem ist ein als Schalldämpfer dienender Resonator 6 vorgesehen, wobei der Resonator 6 in den Ladeluftkühler 5 integriert ist.

Figur 2 zeigt schematisch eine zweite Ausführungsform der Brennkraftmaschine 1. Es soll vorliegend nur ergänzend zu Figur 1 ausgeführt werden, weshalb im Übrigen Bezug genommen wird auf Figur 1. Für dieselben Bauteile wurden dieselben Bezugszeichen verwendet.

Die in Figur 2 dargestellte Brennkraftmaschine 1 verfügt - ausgehend von der in Figur 1 gezeigten Ausführungsform - über einen zusätzlichen Resonator 9, der in den Verdichter 7b integriert ist und zwar vorliegend in den Austrittsbereich des Verdichters 7b.

### Bezugszeichen

- 1: Brennkraftmaschine, Drei-Zylinder-Reihenmotor
- 2: Zylinder
- 3: Abgasleitung
- 4: Ansaugleitung
- 5: Ladeluftkühler
- 6: Resonator
- 7: Abgasturbolader
- 7a: Turbine
- 7b: Verdichter
- 8: Ladeluftschlauch
- 9: zusätzlicher Resonator

## Patentansprüche

1. Brennkraftmaschine (1) mit mindestens einem Zylinder (2), mindestens einer Abgasleitung (3) zum Abführen der Verbrennungsgase aus dem mindestens einen Zylinder (2) und mindestens einer Ansaugleitung (4) zum Zuführen von Frischluft bzw. Frischgemisch in diesen mindestens einen Zylinder (2), die mit mindestens einem Ladeluftkühler (5) ausgestattet ist, der in der mindestens einen Ansaugleitung (4) angeordnet ist, wobei stromabwärts des mindestens einen Zylinders (2) mindestens ein als Schalldämpfer dienender Resonator (6) vorgesehen ist, **dadurch gekennzeichnet, dass**
- der mindestens eine Resonator (6) in den mindestens einen Ladeluftkühler (5) integriert ist.

2. Brennkraftmaschine (1) nach Anspruch 1, **dadurch gekennzeichnet, dass** mindestens ein Abgasturbolader (7) vorgesehen ist, wobei die Turbine (7a) des Abgasturboladers (7) in der mindestens einen Abgasleitung (3) und der Verdichter (7b) in der mindestens einen Ansaugleitung (4) stromaufwärts des mindestens einen Ladeluftkühlers (5) angeordnet ist.

3. Brennkraftmaschine (1) nach Anspruch 1, **dadurch gekennzeichnet, dass** ein als mechanischer Lader dienender Verdichter in der mindestens einen Ansaugleitung (4) stromaufwärts des mindestens einen Ladeluftkühlers (5) angeordnet ist.

4. Brennkraftmaschine (1) nach einem der vorherigen Ansprüche, **dadurch gekennzeichnet, dass** die mindestens eine Ansaugleitung (4) zwischen dem mindestens einen Zylinder (2) und dem Ladeluftkühler (5) mindestens einen Ladeluftschlauch (8) umfaßt.

5. Brennkraftmaschine (1) nach Anspruch 4, **dadurch gekennzeichnet, dass** der mindestens eine Ladeluftschlauch (8) zumindest streckenweise faltenbalgähnlich ausgebildet ist.

6. Brennkraftmaschine (1) nach Anspruch 4 oder 5, bei der ein Verdichter (7b) in der mindestens einen Ansaugleitung (4) stromaufwärts des mindestens einen Ladeluftkühlers (5) angeordnet ist, **dadurch gekennzeichnet, dass** der mindestens eine Ladeluftschlauch (8) zwischen dem Verdichter (7b) und dem Ladeluftkühler (5) angeordnet ist.

7. Brennkraftmaschine (1) nach einem der vorherigen Ansprüche, **dadurch gekennzeichnet, dass** der mindestens eine Resonator (6) ein auf dem Helmholtz-Prinzip beruhender Resonator ist.

8. Brennkraftmaschine (1) nach einem der Ansprüche 1 bis 6, **dadurch gekennzeichnet, dass** der mindestens eine Resonator (6) ein auf dem Herschel-Quincke-Prinzip beruhender Resonator ist.

9. Brennkraftmaschine (1) nach einem der Ansprüche 2 bis 8, **dadurch gekennzeichnet, dass** mindestens ein zusätzlicher Resonator (9) vorgesehen ist, der in den Verdichter (7b) integriert ist.
